# DEMANDE DE BREVET EUROPEEN

(11) **EP 0 570 051 A1**
(43) Date de publication de la demande: **18.11.1993**
(21) Numéro de dépôt: 93201260.2
(22) Date de dépôt: 04.05.1993
(51) Int. Cl.: C08F 10/02, C08F 297/08, C08F 4/78

(54) **Procédé de polymérisation d'oléfines et (co)polymères à blocs dérivés d'au moins une oléfine**

(30) Priorité: 13.05.1992 BE 9200439
(71) Demandeur: SOLVAY (Société Anonyme), B-1050 Bruxelles (BE)
(72) Inventeur: Standaert, Alain, B-1800 Vilvoorde (BE)
(74) Mandataire: Marckx, Frieda

(57) **Abrégé**

Procédé de polymérisation d'au moins une oléfine selon lequel on utilise au moins deux réacteurs de polymérisation, on polymérise une partie de l'oléfine dans un des réacteurs en présence d'un catalyseur comprenant du bis(cyclopentadiényle)chrome éventuellement substitué, on soutire de ce réacteur une composition comprenant un polymère et le catalyseur, et on introduit la composition et une autre partie de l'oléfine dans l'autre réacteur, de l'hydrogène étant introduit dans au moins un des réacteurs.

## Description

La présente invention concerne un procédé de (co)polymérisation d'oléfines, en particulier de l'éthylène, mettant en oeuvre plusieurs réacteurs disposés en série. Elle concerne également des (co)polymères à blocs oléfiniques présentant une distribution du poids moléculaire polymodale, et en particulier de tels (co)polymères à blocs comprenant de l'éthylène, typiquement le polyéthylène.

Dans le brevet US-3392213 (SHELL OIL COMPANY), on décrit un procédé de polymérisation d'oléfines, selon lequel on met en oeuvre plusieurs réacteurs de polymérisation reliés en série, on polymérise l'oléfine en présence du catalyseur dans le premier réacteur de la série, on soutire de celui-ci un polymère et le catalyseur, on les introduit dans le réacteur suivant dans lequel on fait en outre arriver de l'oléfine, on poursuit la polymérisation dans ce réacteur et dans les réacteurs suivants, alimentés chacun en oléfine et en produit provenant du réacteur précédent, on introduit de l'hydrogène dans un au moins des réacteurs, et on récupère du dernier réacteur une polyoléfine présentant une distribution du poids moléculaire étendue. Dans ce procédé connu, le catalyseur utilisé est du type Ziegler et comprend un composé d'un métal de transition et un composé organométallique.

Ce procédé connu nécessite l'emploi d'un cocatalyseur (composé organométallique). La présence d'un cocatalyseur lors de la polymérisation a pour conséquence que les polyoléfines obtenues présentent généralement une teneur élevée en oligomères. Or les oligomères dégradent les propriétés mécaniques et rhéologiques des polyoléfines, limitent leurs applications à cause de leur solubilité considérable à température ambiante et provoquent des fumées lors de la mise en oeuvre des polyoléfines à température élevée. D'autre part, avec ce procédé connu, la modulation de la distribution du poids moléculaire est généralement peu précise, ce qui ne permet pas d'obtenir des polyoléfines ayant des propriétés prédéterminées.

L'invention remédie aux désavantages du procédé connu décrit ci-dessus, en fournissant un procédé nouveau qui permet l'obtention de (co)polymères à blocs présentant une faible teneur en oligomères, et qui réalise en outre une meilleure précision dans l'ajustement de l'indice de fluidité des polyoléfines produites. Le procédé selon l'invention permet dès lors d'obtenir des (co)polymères à blocs ayant des propriétés mécaniques et rhéologiques améliorées.

En conséquence, l'invention concerne un procédé de (co)polymérisation d'au moins une oléfine selon lequel on utilise au moins deux réacteurs de polymérisation, on polymérise une partie de l'oléfine dans un des réacteurs en présence d'un catalyseur, on soutire de ce réacteur une composition comprenant un polymère et le catalyseur, et on introduit la composition et une autre partie de l'oléfine dans l'autre réacteur, de l'hydrogène étant introduit dans un au moins des réacteurs; selon l'invention, on utilise code catalyseur du bis(cyclopentadiényle)chrome éventuellement substitué, sur un support en oxyde minéral.

Dans le procédé selon l'invention l'oléfine n'est pas critique et peut par exemple contenir jusqu'à 20 atomes de carbone par molécule. Elle contient avantageusement de 2 à 8 atomes de carbone par molécule et comprend par exemple l'éthylène, le propylène, le 1-butène, le 1-pentène, le 3-méthyl-1-butène, le 1-hexène, les 3- et 4-méthyl-1-pentènes, le 1-octène, le 3-éthyl-1-butène, le 1-heptène, le 1-décène, le 4,4-diméthyl-1-pentène, le 4,4-diéthylhexène, le 3,4-diméthyl-1-hexène, 4-butyl-1-octène, 5-éthyl-1-décène et le 3,3-diméthyl-1-butène.

Dans le procédé selon l'invention, le polymère qu'on soutire du premier réacteur, est obtenu dans ce réacteur par polymérisation d'une partie de l'oléfine en présence d'un catalyseur.

Selon l'invention, le catalyseur est le bis(cyclopentadiényle)chrome représenté par la formule (C₅H₅)-Cr-(C₅H₅), ou un composé substitué du bis(cyclopentadiényle)chrome, représenté par la formule (C₅RABCD)-Cr-(C₅A'B'C'D'E'), où R désigne un radical hydrocarboné ayant jusqu'à 20 atomes de carbone, et A, B, C, D, A', B', C', D', E' désignent chacun un atome d'hydrogène ou un radical hydrocarboné ayant jusqu'à 20 atomes de carbone. Les radicaux hydrocarbonés peuvent être saturés ou insaturés et ils peuvent comprendre par exemple des radicaux aliphatiques code un radical méthyle, propyle, butyle, ou allyle, des radicaux alicycliques comme un radical cyclopentyle, cyclohexyle ou cycloheptyle et des radicaux aromatiques comme un radical phényle et naphtyle. On utilise de préférence le bis(cyclopentadiényle)chrome non-substitué.

Le bis(cyclopentadiényle)chrome et ses composés substitués décrits ci-dessus, peuvent être obtenus par les procédés de préparation divulgués dans les brevets US-4077904 (UNION CARBIDE CORPORATION) et US-3709853 (UNION CARBIDE CORPORATION), où il est utilisé comme catalyseur pour l'obtention de polyéthylène ayant une distribution de poids moléculaire étroite.

Dans le procédé suivant l'invention, le bis(cyclopentadiényle)chrome éventuellement substitué est déposé sur un support. A cet effet on peut par exemple utiliser un oxyde minéral choisi parmi les oxydes de silicium, d'aluminium, de titane, de zirconium, de thorium et leurs mélanges tels que le silicate d'aluminium, les oxydes minéraux activés par fluoration et le phosphate d'aluminium. La silice et le phosphate d'aluminium conviennent bien, en particulier la silice. Le support et le catalyseur peuvent être obtenus comme décrits dans les brevets US-3709853 (UNION CARBIDE CORPORATION) et US-4077904 (UNION CARBIDE CORPORATION).

Dans le procédé selon l'invention on met en oeuvre une installation comprenant au moins deux réacteurs de polymérisation disposés en série et reliés entre eux. Chaque réacteur est alimenté en oléfine. Le catalyseur est uniquement introduit dans le premier réacteur, dans lequel on polymérise l'oléfine jusqu'à l'obtention d'un polymère présentant les caractéristiques propres aux conditions de polymérisation de ce réacteur. On transfère dans le réacteur suivant, de préférence d'une manière continue, la composition provenant du premier réacteur et comprenant le polymère obtenu et le catalyseur. Dans ce deuxième réacteur on polymérise l'oléfine qui y est introduite, à l'aide du catalyseur provenant du réacteur précédent. On introduit de l'hydrogène comme agent de transfert modulant le poids moléculaire du polymère obtenu, dans au moins un des réacteurs, de manière continue ou discontinue. De préférence, on alimente les deux réacteurs de polymérisation en hydrogène, de manière que la concentration d'hydrogène dans le premier réacteur soit différente de la concentration d'hydrogène dans le deuxième réacteur. En utilisant ainsi dans le second réacteur des conditions de polymérisation différentes de celles mises en oeuvre dans le premier réacteur, le polymère produit dans le second réacteur présente un poids moléculaire différent de celui produit dans le premier, et le produit polymérisé global obtenu combine les caractéristiques propres aux conditions opératoires du premier ainsi que du second réacteur. L'installation peut évidemment comprendre plus de deux réacteurs connectés en série qui sont alimentés séparément en oléfine et avec la composition provenant du réacteur précédent de la série. De préférence, on utilise deux réacteurs disposés en série.

Dans le procédé selon l'invention, le processus de polymérisation dans le premier réacteur est sélectionné parmi les processus en solution, en suspension ou en phase gazeuse, indifféremment du choix du processus utilisé dans l'autre réacteur. On peut par exemple réaliser la polymérisation dans les deux réacteurs en phase gazeuse, ou dans le premier réacteur en suspension et dans le deuxième en phase gazeuse.

Dans le cas d'une polymérisation en suspension, celle-ci est effectuée dans un diluant hydrocarboné inerte vis-à-vis du catalyseur et de la polyoléfine produite, tel que les hydrocarbures aliphatiques, cycloaliphatiques et aromatiques liquides, à une température telle qu'au moins 50 % (de préférence au moins 70 %) du polymère formé y soit insoluble. Les diluants préférés sont les alcanes linéaires tels que le n-butane, le n-hexane et le n-heptane, ou les alcanes ramifiés tels que l'isobutane, l'isopentane, l'isooctane et le 2,2-diméthylpropane, ou les cycloalcanes tels que le cyclopentane et le cyclohexane ou leurs mélanges. La température de polymérisation est choisie généralement de 20 à 200 °C, de préférence de 50 à 100 °C. La pression ° partielle d'oléfine est choisie le plus souvent de la pression atmosphérique à 5 MPa, de préférence de 0,4 à 2 MPa, plus particulièrement de 0,6 à 1,5 MPa.

Dans le cas d'une polymérisation en solution, celle-ci peut être réalisée dans un diluant organique inerte tel que décrit ci-dessus. La température opératoire dépend du diluant organique utilisé et doit être supérieure à la température de dissolution de la polyoléfine dans celui-ci, de sorte qu'au moins 50 % (de préférence au moins 70 %) de la polyoléfine y soit dissous. Par ailleurs la température doit être suffisamment basse pour empêcher une dégradation thermique de la polyoléfine et/ou du catalyseur. En général, la température optimale est comprise de 100 à 200 °C. La pression partielle d'oléfine est choisie le plus souvent de la pression atmosphérique à 5 MPa, de préférence de 0,4 à 2 MPa, plus particulièrement de 0,6 à 1,5 MPa. Il est également possible d'effectuer la polymérisation en solution sans ajouter de diluant, l'oléfine constituant elle-même le milieu réactionnel. Dans cette forme de réalisation, on peut utiliser une oléfine liquide dans les conditions normales de pression et de température, ou opérer sous une pression suffisante pour qu'une oléfine normalement gazeuse soit liquéfiée.

Dans le cas où la polymérisation est effectuée en phase gazeuse, on met un courant gazeux comprenant l'oléfine en contact avec le catalyseur dans un lit fluidisé. Dès lors le débit du courant gazeux doit être suffisant pour maintenir la polyoléfine en fluidisation et dépend de la vitesse de formation de celle-ci et de la vitesse à laquelle le catalyseur est consommé. La pression partielle de l'oléfine peut être inférieure ou supérieure à la pression atmosphérique, la pression partielle préférée étant de la pression atmosphérique à environ 7 MPa. En général, une pression de 0,2 à 5 MPa convient bien. Le choix de la température n'est pas critique, celle-ci est en général comprise de 30 à 200 °C. On peut éventuellement utiliser un gaz de dilution, qui doit être inerte vis-à-vis de l'oléfine.

Dans le procédé suivant l'invention, on alimente chaque réacteur en oléfine et au moins un des réacteurs en hydrogène. La pression partielle de l'hydrogène dans le réacteur est avantageusement comprise de 0,01 à 0,50 MPa, plus particulièrement de 0,015 à 0,40 MPa, de préférence de 0,018 à 0,35 MPa, le rapport entre les pressions partielles de l'hydrogène et de l'oléfine n'excédant pas 3, en général n'excédant pas 1/3 et étant par exemple compris de 0,01 à 0,30.

Dans le procédé selon l'invention, on peut éventuellement mettre en oeuvre un cocatalyseur en plus du bis(cyclopentadiényle)chrome.

On préfère toutefois, suivant une forme de réalisation avantageuse du procédé selon l'invention, que le catalyseur consiste en bis(cyclopentadiényle)chrome, sans cocatalyseur. Cette forme de réalisation présente l'avantage de réduire la formation d'oligomères lors de la polymérisation.

Dans une autre forme de réalisation du procédé selon l'invention, l'hydrogène est introduit dans au moins un des réacteurs de manière continue, le rapport de la pression partielle d'hydrogène à celle de l'oléfine dans le réacteur étant constant durant le temps nécessaire à la production d'une quantité définie de polymère, et n'excédant pas 3, en général n'excédant pas 1/3. Dans cette forme de réalisation, la pression partielle de l'hydrogène dans le réacteur est avantageusement comprise de 0,01 à 0,50 MPa, plus particulièrement de 0,015 à 0,40 MPa, de préférence de 0,018 à 0,35 MPa et le rapport entre les pressions partielles de l'hydrogène et de l'oléfine compris de 0,01 à 0,30.

Dans une forme de réalisation du procédé selon l'invention, que l'on préfère, les deux réacteurs peuvent être alimentés en hydrogène, le rapport entre les pressions partielles de l'oléfine et de l'hydrogène dans le premier réacteur étant différent de celui mis en oeuvre dans le second réacteur. Dans cette forme de réalisation il est important de maintenir ces rapports constants dans chaque réacteur pendant la durée de la polymérisation. Le quotient de ces deux rapports est avantageusement supérieur à 5, de préférence à 10; il est souhaitable qu'il n'excède pas 100, par exemple 80. Dans le cas du polyéthylène, on peut par exemple sélectionner un quotient de 10 à 50.

Le procédé selon l'invention s'applique en particulier à la polymérisation d'homopolymères d'oléfines, de préférence de l'éthylène. Le procédé suivant l'invention convient également bien pour la copolymérisation d'oléfines, de préférence de l'éthylène, avec des comonomères oléfiniquement insaturés et comprenant jusqu'à 8 atomes de carbone. Des dioléfines comprenant de 4 à 18 atomes de carbone peuvent également être copolymérisées avec l'éthylène. De préférence, les dioléfines sont des dioléfines aliphatiques non conjuguées telles que le 4-vinylcyclohexène et le 1,5-hexadiène, ou des dioléfines alicycliques ayant un pont endocyclique telles que le dicyclopentadiène, le méthylène- et l'éthylidènenorbornène et des dioléfines aliphatiques conjuguées telles que le 1,3- butadiène, l'isoprène et le 1,3-pentadiène.

Le procédé selon l'invention convient particulièrement bien pour la fabrication d'homopolymères de l'éthylène et de copolymères contenant au moins 90 %, de préférence au moins 95 %, en poids d'éthylène. Les comonomères préférés sont choisis parmi le propylène, le 1-butène, le 1-hexène et le 1-octène.

Le procédé selon l'invention présente la particularité avantageuse qu'il ne nécessite pas l'emploi d'un cocatalyseur, en général un produit pyrophorique; il en résulte une maîtrise plus aisée des paramètres opératoires de la polymérisation.

Le procédé suivant l'invention permet l'obtention d'homopolymères et de copolymères présentant une distribution de poids moléculaire polymodale. Ces polymères comprennent plusieurs blocs polymériques présentant chacun une distribution étroite du poids moléculaire, les poids moléculaires moyens des blocs étant différents. Le procédé selon l'invention permet notamment de fabriquer des homo- ou des copolymères caractérisés par un rapport M_{w}/Mₙ de 10 à 60, où M_{w} et Mₙ désignent respectivement le poids moléculaire moyen en poids et le poids moléculaire moyen en nombre de la polyoléfine produite.

Le procédé selon l'invention permet par ailleurs d'obtenir des polyoléfines comprenant au moins deux blocs polymériques, dont les indices de fluidité sont différents, généralement compris de 0,1 à 1000 g/10 min. Le rapport de ces indices de fluidité dans les deux blocs peut ainsi atteindre une valeur maximale de 10000. D'autre part, le procédé selon l'invention permet aussi d'obtenir des (co)polymères à blocs à une faible teneur en oligomères n'excédant pas 15 % du poids de polyoléfine, en général inférieure à 7 % du poids de polyoléfine. Il permet notamment d'obtenir des (co)polymères à blocs dont la teneur en oligomères n'excède pas 5 % en poids et peut descendre jusqu'à 0,5 % en poids.

L'invention concerne dès lors aussi des (co)polymères à blocs, de préférence comprenant du polyéthylène, présentant une teneur en oligomères au maximum égale à 15 % (généralement de 0,5 à 5 %) de son poids et un rapport M_{w}/Mₙ de 10 à 60, les blocs présentant des indices de fluidité différents de 0,1 à 1000 g/10 min. L'invention concerne en particulier les (co)polymères obtenus au moyen du procédé selon l'invention et présentant les caractéristiques énoncées ci-dessus. On entend désigner par oligomères des polymères comprenant au maximum 10 unités monomériques. On entend désigner par indice de fluidité celui mesuré à 190 °C sous une charge de 21,6 kg.

Les (co)polymères selon l'invention trouvent une utilisation particulièrement intéressante dans une large gamme d'applications industrielles, du fait qu'elles combinent de bonnes propriétés de mise en oeuvre et de bonnes propriétés mécaniques telles que la résistance au choc et à la fissuration sous contrainte.

Les exemples dont la description suit, servent à illustrer l'invention. Dans ces exemples on a préparé des catalyseurs que l'on a ensuite utilisés pour polymériser de l'éthylène en suspension.

La signification des symboles utilisés dans ces exemples, les unités exprimant les grandeurs mentionnées et les méthodes de mesure de ces grandeurs sont explicitées ci-dessous.
- HLMI =: indice de fluidité exprimé en fondu, mesuré sous une charge de 21,6 kg à 190 °C et exprimé en g/10 min suivant la norme ASTM D 1238.
- M_{w}/Mₙ =: rapport entre le poids moléculaire moyen en poids et le poids moléculaire moyen en nombre mesuré par chromatographie d'exclusion stérique réalisée dans le 1,2,4-tri-chlorobenzène à 135 °C sur un chromatographe WATERS type 150 C.
- η_{O} =: viscosité dynamique exprimée en Pa.s et mesurée à un gradient de vitesse de 1 s⁻¹ et à 190 °C.
- η₂ =: viscosité dynamique exprimée en Pa.s et mesurée à un gradient de vitesse de 100 s⁻¹ et à 190 °C.
- Ol =: teneur en oligomères exprimée en gramme d'oligomères par kilo de polyoléfine et mesurée par extraction à l'hexane à sa température d'ébullition.
- ESCR =: résistance à la fissuration sous contrainte exprimée en heure et mesurée par la méthode de BELL (norme ASTM D 1693).

### Exemple 1 (conforme à l'invention)

### A. Préparation du catalyseur

On a préparé une solution de bis(cyclopentadiényle)chrome dans le toluène, que l'on a ensuite ajoutée à une quantité déterminée de silice (Produit GRACE® 532), déshydratée sous atmosphère inerte à une température de 815 °C pendant 16 h, de telle manière que le contenu en chrome final soit de 1 % en poids. Le toluène a été éliminé sous pression réduite. Le bis(cyclopentadiényle)chrome a été sublimé sous pression réduite sur le support de silice pendant 5 heures. Le retour à la pression atmosphérique a été fait sous azote sec et le catalyseur obtenu a été conservé à l'abri de l'oxygène et de l'eau.

### B. Polymérisation de l'éthylène

Le procédé de polymérisation en deux réacteurs successifs a été simulé dans un seul réacteur en deux étapes séparées par une détente intermédiaire et réinitialisation des paramètres opératoires.

### Première étape :

On a introduit dans un autoclave de 3 litres, préalablement séché et muni d'un agitateur, 90 mg de catalyseur obtenu en A et 1 litre d'isobutane. Puis on a élevé la température à 70 °C, on y a ensuite introduit une dose unique d'hydrogène à une pression de 0,22 MPa et de l'éthylène. La pression partielle d'éthylène a été maintenue constante à une valeur de 0,61 MPa durant le temps de production de 140 g de polyéthylène.

L'autoclave a ensuite été refroidi et dégazé jusqu'à une pression relative de 0,05 MPa.

### Deuxième étape :

On a introduit 1 litre d'isobutane dans l'autoclave. La température a été amenée à 70 °C. On a ensuite introduit une dose d'hydrogène à une pression de 0,01 MPa et de l'éthylène. La pression partielle d'éthylène a été maintenue constante à une valeur de 1,02 MPa jusqu'à l'obtention d'une quantité supplémentaire de 140 g de polyéthylène. Après dégazage, on a recueilli de l'autoclave 280 g de polyéthylène sous forme de grains. On a obtenu les résultats suivants :
- HLMI: = 3,6
- M_{w}/Mₙ: = 57,56
- η_{O}/η₂: = 19,4
- Ol: = 5,4.

### Exemple 2 (conforme à l'invention)

### A. Préparation du catalyseur

Le catalyseur a été préparé par la méthode décrite dans l'exemple 1 (A).

### B. Polymérisation de l'éthylène

On a répété les opérations de l'exemple 1 (B) dans les conditions opératoires suivantes :

### Première étape :

- pression partielle initiale d'hydrogène : 0,22 MPa
- pression partielle d'éthylène : 0,61 MPa
- quantité de polyéthylène produit : 425 g

### Deuxième étape :

- pression partielle initiale d'hydrogène : 0,01 MPa
- pression partielle d'éthylène : 1,02 MPa
- quantité de polyéthylène produit dans la deuxième étape : 425 g
- quantité totale de polyéthylène produit : 850 g

On a obtenu les résultats suivants :
- HLMI: = 7,3
- η_{O}/η₂: = 15,8
- Ol: = 8,9
- ESCR: = 68.

### Exemple 3 (de référence)

Dans cet exemple on a effectué la polymérisation de l'éthylène en utilisant un catalyseur du type Ziegler décrit dans le brevet US-4617360 au nom de la demanderesse, en répétant les opérations de l'exemple 1(B) dans les conditions opératoires suivantes :

### Première étape :

- pression partielle initiale d'hydrogène : 0,9 MPa
- pression partielle d'éthylène : 0,6 MPa
- quantité de polyéthylène produit : 160 g

### Deuxième étape :

- pression partielle initiale d'hydrogène : 0,02 MPa
- pression partielle d'éthylène : 0,4 MPa
- quantité de polyéthylène produit dans la deuxième étape : 221 g.
- quantité totale de polyéthylène produit : 381 g

On a obtenu les résultats suivants :
- HLMI: = 3,9
- η_{O}/η₂: = 13,1
- Ol: = 13,1.

## Revendications

1. Procédé de polymérisation d'au moins une oléfine selon lequel on utilise au moins deux réacteurs de polymérisation, on polymérise une partie de l'oléfine dans un des réacteurs en présence d'un catalyseur, on soutire de ce réacteur une composition comprenant un polymère et le catalyseur, et on introduit la composition et une autre partie de l'oléfine dans l'autre réacteur, de l'hydrogène étant introduit dans au moins un des réacteurs, caractérisé en ce qu'on utilise comme catalyseur du bis(cyclopentadiényle)chrome éventuellement substitué, sur un support en oxyde minéral.

2. Procédé selon la revendication 1, caractérisé en ce que le catalyseur consiste en bis(cyclopentadiényle)chrome éventuellement substitué, sur un support en oxyde minéral, sans cocatalyseur.

3. Procédé selon la revendication 1 ou 2, caractérisé en ce qu'on met en oeuvre du bis(cyclopentadiényle)chrome non substitué.

4. Procédé selon l'une quelconque des revendications 1 à 3, caractérisé en ce que l'oxyde minéral est de la silice.

5. Procédé selon l'une quelconque des revendications 1 à 4, caractérisé en ce qu'on introduit l'hydrogène en continu dans le réacteur.

6. Procédé selon la revendication 5, caractérisé en ce qu'on alimente un seul des deux réacteurs en hydrogène.

7. Procédé selon la revendication 5, caractérisé en ce qu'on introduit l'hydrogène dans les deux réacteurs, le rapport entre la quantité d'hydrogène et la quantité de l'oléfine dans l'un des réacteurs étant différent de ce rapport dans l'autre réacteur.

8. Procédé selon l'une quelconque des revendications 1 à 7, caractérisé en ce que l'oléfine est l'éthylène.

9. (Co)polymère à blocs dérivé d'au moins une oléfine présentant une teneur en oligomères au maximum égale à 15 % de son poids et une distribution de poids moléculaire polymodale ayant un rapport M_{w}/Mₙ de 10 à 60, les blocs présentant des indices de fluidité différents de 0,1 à 1000 g/10 min.

10. (Co)polymère selon la revendication 9, caractérisé en ce que la teneur pondérale en oligomères est de 0,5 à 5 %.

11. (Co)polymère selon la revendication 9 ou 10, caractérisé en ce qu'il est obtenu par le procédé conforme à l'une quelconque des revendications 1 à 8.

12. (Co)polymère selon l'une quelconque des revendications 9 à 11, caractérisé en ce qu'il comprend du polyéthylène.
